# EUROPEAN PATENT SPECIFICATION

(11) **EP 0 924 746 B1**
(45) Date of publication and mention of the grant of the patent: **08.10.2003**
(21) Application number: 98204107.1
(22) Date of filing: 03.12.1998
(51) Int. Cl.: H01J 61/30, H01J 61/44, H01J 61/72

(54) **Low-pressure mercury discharge lamp**
Niederdruck-Quecksilberentladungslampe
Lampe à décharge basse pression au mercure

(30) Priority: 19.12.1997 EP 97204031
(43) Date of publication of application: 23.06.1999
(73) Proprietor: Koninklijke Philips Electronics N.V., 5621 BA Eindhoven (NL); Philips Intellectual Property & Standards GmbH, 20099 Hamburg (DE)
(72) Inventor: Justel, Thomas, c/o Inter. Octrooibureau B.V, 5656 AA Eindhoven (NL); Nikol, Hans, c/o Inter. Octrooibureau B.V., 5656 AA Eindhoven (NL); Ronda, Cornelis R., Inter. Octrooibureau B.V., 5656 AA Eindhoven (NL)
(74) Representative: Bosma, Rudolphus Hubertus Antonius

(56) References cited:
- EP-A- 0 188 211
- EP-A- 0 448 170
- GB-A- 2 059 147
- US-A- 3 692 689
- US-A- 3 764 840
- US-A- 4 423 349
- US-A- 4 634 927
- US-A- 4 645 969
- US-A- 4 859 903
- US-A- 5 234 625
- DATABASE WPI Section Ch, Week 9804 Derwent Publications Ltd., London, GB; Class L01, AN 98-033406 XP002101168 & CN 1 135 654 A (JINGUANG LAMP & LANTERNS FACTORY SHANGHA), 13 November 1996

## Description

The invention relates to a low-pressure mercury discharge lamp for tanning purposes, comprising
- a lamp vessel which is closed in a gastight manner and filled with mercury and one or more inert gases,
- a luminescent screen,
- means for maintaining a discharge in the lamp vessel, during operation of the lamp.

Such a low-pressure mercury discharge lamp, hereinafter also referred to as lamp, is known from US 4,703,224. Said known lamp comprises a lamp vessel formed from an "open" glass having a relatively high transmission for UV-radiation of a relatively short wavelength. The luminescent screen of the known lamp comprises a mixture of cerium-activated strontium magnesium aluminate, europium-activated strontium pyrophosphate and europium-activated barium pyrophosphate. The emission spectrum of this luminescent screen for wavelengths below 400 nm corresponds substantially to the spectrum of sunlight. Since the UV-radiation acting on the skin is situated mainly in this wavelength range, the emission spectrum of the known lamp has biological effects which also correspond substantially to those of sunlight. More particularly, the lamp has advantageous properties as regards tanning and thickening of the skin so that an increased resistance against reddening of the skin caused by over-exposure to sunlight is brought about. A drawback of the known lamp, however, is that the luminescent substances included in the luminescent screen demonstrate a certain degree of optical interaction with each other, so that a part of the light emitted by these luminescent substances is absorbed again by the luminescent screen. This optical interaction causes a relatively low effectiveness of the lamp. Since the degree to which optical interaction occurs depends substantially on the thickness of the luminescent screen, and in practice this thickness varies relatively substantially within a lamp, the optical interaction causes relatively large differences between the emission spectra of different parts of the luminescent screen.

It is an object of the invention to provide a low-pressure mercury discharge lamp for tanning purposes whose emission spectrum for wavelengths below 400 nm corresponds substantially to the spectrum of sunlight, said lamp also having a relatively high effectiveness, and the difference between the emission spectra of different parts of the luminescent screen being relatively small.

To achieve this, a low-pressure mercury discharge lamp as described in the opening paragraph is characterized in that
- the lamp vessel is made of a short-wave UV radiation-absorbing material whose transmission for UV radiation with a wavelength of 312.6 nm ranges between 10% and 50% and whose wavelength range over which the transmission of the UV radiation changes from 20% to 80% is smaller than 40 nm and greater than 28 nm,
- the luminescent screen includes a first luminescent material having an emission band with an emission maximum between 300 nm and 330 nm and a half-value width of this emission ranging between 15 and 30 nm, and
- the luminescent screen further includes a second luminescent material whose reflection for UV radiation of a wavelength above 300 nm is more than 80%, and said material having an emission band with an emission maximum in the wavelength range from 340 nm to 370 nm, the half-value width of which ranges between 35 nm and 80 nm.

The absorption properties of the glass and the emission properties of the luminescent screen jointly bring about that the emission spectrum of the lamp for wavelengths below 400 nm corresponds substantially to the spectrum of sunlight. It has also been found that a lamp in accordance with the invention has a relatively high effectiveness and that there are only relatively small differences between the emission spectra of different parts of the luminescent screen.

It has been found that a very good correspondence between the solar spectrum and the emission spectrum of the lamp for wavelengths belonging to UV-B radiation is achieved if the first luminescent material includes cerium-activated lanthanumphosphate, hereinafter referred to as LAP, and, more particularly, if use is made of a lamp vessel whose transmission for radiation with a wavelength of 312.6 nm ranges between 30% and 40%.

Good results have been obtained with lamps in accordance with the invention in which the second luminescent material includes lead-activated bariumsilicate, hereinafter referred to as BSP. Good results have also been achieved with lamps in which the second luminescent material includes lead-activated strontium magnesium silicate, hereinafter referred to as SMS.

It proved possible to further increase the correspondence between the emission spectrum for wavelengths below 400 nm of such a lamp and the solar spectrum by adding a third luminescent material whose reflection for UV radiation having a wavelength above 300 nm exceeds 80%, said material having an emission band with an emission maximum between 370 nm and 400 nm and a half-value width in the range between 35 nm and 80 nm. It has been found that lead-activated barium strontium magnesium borate, hereinafter referred to as BMB, can very suitably be used as the third luminescent substance.

The solar spectrum varies with the altitude of the sun and hence with the location on earth where it is measured, and it is also influenced by atmospheric conditions. It has been found that the solar spectrum can very well be imitated under substantially varying conditions by means of low-pressure mercury discharge lamps in accordance with the invention including LAP and BSP, if the quantity of LAP ranges between 10 and 50% by weight of the luminescent screen. For low-pressure mercury discharge lamps in accordance with the invention including LAP and SMS, this proved to be the case if the quantity of LAP ranges between 3 and 40% by weight of the luminescent screen. In either case, the percentage of cerium in the LAP was approximately 10%.

It has also been found that in the case of lamps in accordance with the invention whose luminescent screen comprises LAP, BSP and BMB, a very good correspondence between the emission spectrum of the lamp and varying solar spectra could be achieved if the luminescent screen comprises between 10 and 40% by weight LAP and between 10 and 40% by weight BSP.

These and other aspects of the invention will be apparent from and elucidated with reference to the embodiments described hereinafter.

In the drawings:
Fig. 1 shows the erythema L emission spectrum of a first low-pressure mercury discharge lamp in accordance with the invention, and the erythema-weighted spectrum of sunlight;
Fig. 2 shows the erythema L emission spectrum of a second low-pressure mercury discharge lamp in accordance with the invention and the erythema-weighted spectrum of sunlight, and
Fig. 3 shows the erythema L emission spectrum of a third low-pressure mercury discharge lamp in accordance with the invention and the erythema-weighted spectrum of sunlight.

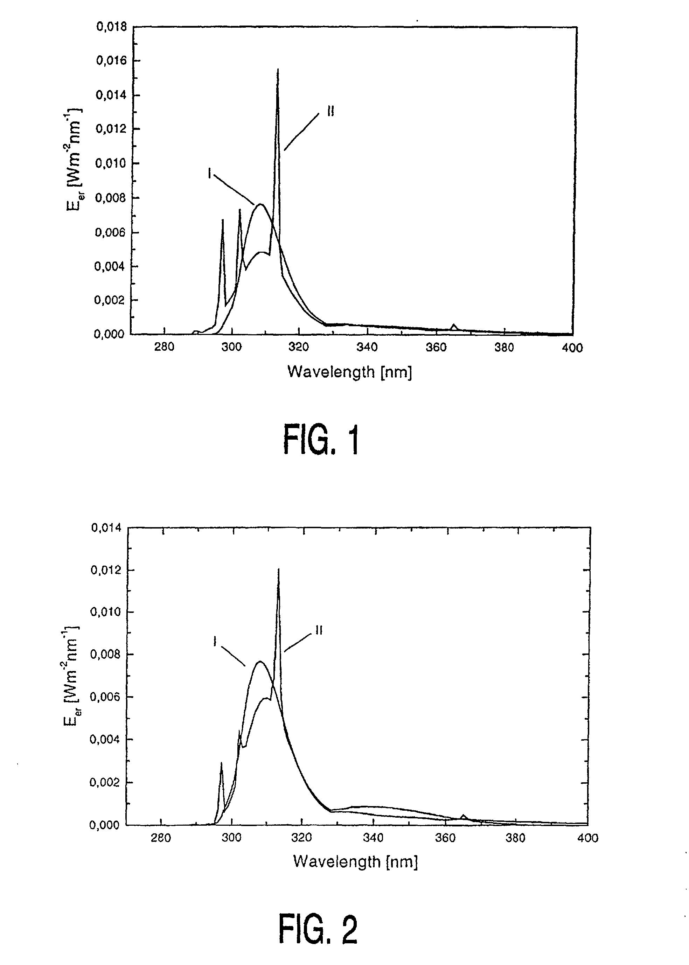

In Figs. 1 through 3, there is plotted along the horizontal axis, the wavelength in nm and along the vertical axis, the erythema-weighted radiation power or, in other words, the effective radiation power per unit of wavelength Eₑᵣ in Wm⁻² nm⁻¹. The effective radiation power per unit of wavelength is obtained by multiplying the power per unit of wavelength by the effectiveness of the relevant radiation for tanning. This effective radiation power per unit of wavelength as a function of the wavelength of the light emitted by a lamp constitutes the erythema-weighted emission spectrum of the lamp, which is indicated by curve II in each Figure. Curve I represents the erythema-weighted solar spectrum, the intensity of the radiation at each wavelength being multiplied by the effectiveness of UV radiation of this wavelength for tanning. The solar spectrum used was the Bjorn and Murphy spectrum which is based on a computer simulation as described by L.O. Bjorn in "Radiation Measurement in Photobiology", Academic Press, London, 1989, ed. B.L. Diffey. The Bjorn and Murphy spectrum simulates the solar spectrum for an altitude of the sun of 60 degrees. For each of the Figures 1-3, it applies that the overall effective power within the shown wavelength range from 280 nm to 400 nm of curve I is equal to that of curve II.

The lamps used were T8-type. The lamp vessel of the first, second and third low-pressure mercury discharge lamp was tubular and made from Philips 290 glass. This glass transmits UV radiation having a wavelength of 312.6 nm for approximately 35%. The wavelength range over which the transmission of the UV radiation changes from 20% to 80% is approximately 30 nm. The length of the lamp vessel was approximately 180 cm and the diameter 2.6 cm. Electrodes were provided at both ends of the lamp vessel, and a discharge was maintained between said electrodes during stationary operation of the lamp. The rated power consumed by the lamps was 70 Watt. The activation percentages of the LAP, BSP, SMS and BMB used were, respectively, approximately 10%, 1%, 1% and 2%. The emission maxima of the emission bands of the LAP, BSP, SMS and BMB used were, respectively, at 317 nm, 350 nm, 365 nm and 375 nm, and the half-value widths were, respectively, 25 nm, 39 nm, 70 nm and 59 nm. The luminescent material BMB was obtained by mixing BaCO₃, SrCO₃, MgO and H₃BO₃ with PbO and, successively, heating this mixture to 900 °C, grinding it and heating it again to 900 °C. In this manner, BMB was obtained having the general formula Ba_{1-x-y}SrₓMg(BO₃)₂-Pb_{y}, where 0 < x < 0.5 and 0.001 < y < 0.05. The formula of the BMB material used was approximately Ba_{1,5}Sr_{0,5}Mg(BO₃)₂: 1 % Pb²⁺. Each lamp contained 15 mg Hg and 2.2 mbar of a gas composed of 25% Ar and 75% Kr.

The luminescent screen of the first low-pressure mercury discharge lamp was composed of 4% by weight LAP and 96% by weight SMS. The luminescent screen of the second low-pressure mercury discharge lamp was composed of 26% by weight LAP and 74% by weight BSP. The luminescent screen of the third low-pressure mercury discharge lamp was composed of 12% by weight LAP, 30% by weight BSP and 58% by weight BMB. The coating weight was 2.8 mg/cm² for each of the three lamps. The overall quantity of effective (or erythema-weighted) UV radiation was 32.2 mW.

It can be observed that for the first low-pressure mercury discharge lamp the effective emission spectrum corresponds substantially to the effective solar spectrum. The ratio between the quantity of effective UV-B radiation (280 nm-320 nm) and the quantity of effective UV-A radiation (320 nm-400 nm) is approximately equal to that of the sun, and the same applies to the ratio between the quantity of effective UV-A1 radiation (340 nm-400 nm) and the quantity of effective UV-A2 radiation (320 nm-340 nm).

Fig. 2 shows that the effective emission spectrum of the second low-pressure mercury discharge lamp exhibits an even substantially greater correspondence to the effective solar spectrum. By integrating over the wavelength range shown the absolute difference in amplitude between the curves I and II and dividing it by the surface under curve I or curve II, it was found that the spectrum of the lamp deviates less than 4% from the Bjorn and Murphy spectrum. In this respect, it is noted that also the quantity of effective UV radiation (78.4 mW) supplied by this lamp is substantially higher than that of the first lamp.

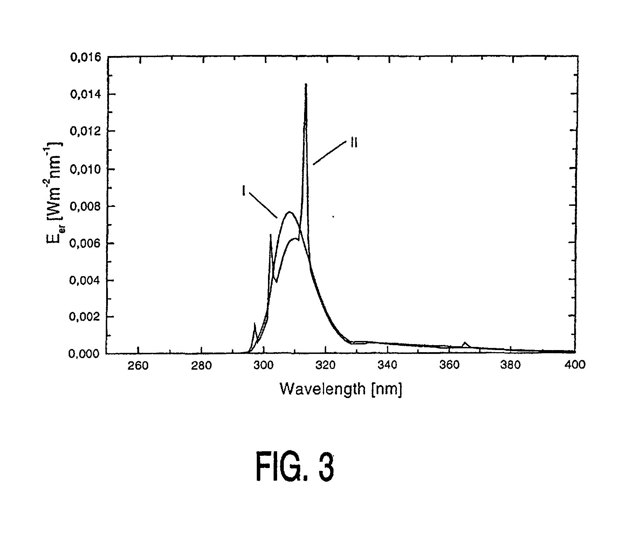

Fig. 3 shows that the correspondence between the effective solar spectrum and the effective emission spectrum of the third low-pressure mercury discharge lamp has been further improved, particularly in the UV-A region, relative to the second low-pressure mercury discharge lamp. The overall quantity of effective UV-radiation (41.1 mW), however, is lower than that of the second lamp.

Apart from the above-mentioned Bjorn and Murphy spectrum, use has also been made of the Celled spectrum and the spectrum in accordance with DIN67501. The DIN67501 spectrum is also based on a computer simulation and simulates the solar spectrum in a place on the equator on which the sun shines down at a right angle. The DIN67501 spectrum is described in "Experimentelle Bewertung des Erythemschutzes von externen Sonnenschutzmitteln für die menschliche Haut" DIN67501, June 1996. The Sylt spectrum was experimentally determined on the island of Sylt in the North Sea on a dune top 10 meters above sea level on July 11th, 1995 around noon. This spectrum is described in C. Stick et. al., Phys. Rehab. Kur. Med. 6, 1996, 1-6. Using exclusively LAP and BSP, lamps in accordance with the invention were manufactured which simulated the DIN67501 spectrum or the Sylt spectrum. The gas filling, the glass composition and the coating weight of these lamps corresponded to those of the lamps described hereinabove. The emission spectrum of these lamps most closely resembled the Sylt spectrum in the case where the luminescent screen contained 35% by weight LAP and 65% by weight BSP. The best correspondence between the emission spectrum of the lamps and the DIN67501 spectrum was found for lamps whose luminescent screen contained 46% by weight LAP and 54% by weight BSP. In the manner already described hereinabove, the absolute difference in amplitude between the erythema-weighted solar spectrum and the erythema-weighted lamp spectrum was integrated over the wavelength range from 280 nm to 400 nm, and the result was divided by the total erythema-weighted power of the solar spectrum in this wavelength range. In this manner, it was found that the lamp which best simulated this spectrum deviated less than 6% from the Sylt spectrum. The lamp which best simulated the DIN67501 spectrum deviated less than 7% from this DIN67501 spectrum.

## Claims

1. A low-pressure mercury discharge lamp for tanning purposes, comprising
- a lamp vessel which is closed in a gastight manner and filled with mercury and one or more inert gases,
- a luminescent screen,
- means for maintaining a discharge in the lamp vessel, during operation of the lamp,
**characterized in that**
- the lamp vessel is made of a short-wave UV radiation-absorbing material whose transmission for UV radiation with a wavelength of 312.6 nm ranges between 10% and 50% and whose wavelength range over which the transmission of the UV radiation changes from 20% to 80% is smaller than 40 nm and greater than 28 nm,
- the luminescent screen includes a first luminescent material having an emission band with an emission maximum between 300 nm and 330 nm and a half-value width of this emission ranging between 15 and 30 nm, and
- the luminescent screen further includes a second luminescent material whose reflection for UV radiation of a wavelength above 300 nm is more than 80%, and said material having an emission band with an emission maximum in the wavelength range from 340 nm to 370 nm, the half-value width of which ranges between 35 nm and 80 nm.

2. A low-pressure mercury discharge lamp as claimed in claim 1, in which the first luminescent material comprises cerium-activated lanthanumphosphate.

3. A low-pressure mercury discharge lamp as claimed in claim 2, in which the transmission of the lamp vessel for radiation with a wavelength of 312.6 nm ranges between 30% and 40%.

4. A low-pressure mercury discharge lamp as claimed in claim 1, 2 or 3, in which the second luminescent material includes lead-activated bariumsilicate.

5. A low-pressure mercury discharge lamp as claimed in one or more of the preceding claims, in which the second luminescent material includes lead-activated strontium magnesium silicate.

6. A low-pressure mercury discharge lamp as claimed in one or more of the preceding claims, in which the luminescent screen further comprises a third luminescent material whose reflection for UV radiation having a wavelength above 300 nm exceeds 80%, said material having an emission band with an emission maximum between 370 nm and 400 nm and a half-value width in the range between 35 nm and 80 nm.

7. A low-pressure mercury discharge lamp as claimed in claim 6, in which the third luminescent material comprises lead-activated barium strontium magnesium borate.

8. A low-pressure mercury discharge lamp as claimed in claims 2 and 4, in which the cerium-activated lanthanumphosphate accounts for between 10 and 50% by weight of the luminescent screen.

9. A low-pressure mercury discharge lamp as claimed in claims 2 and 5, in which the cerium-activated lanthanumphosphate accounts for between 3 and 40% by weight of the luminescent screen.

10. A low-pressure mercury discharge lamp as claimed in claims 2, 4 and 7, in which the luminescent screen comprises between 10 and 40% by weight of cerium-activated lanthanumphosphate and between 10 and 40% by weight of lead-activated bariumsilicate.

## Patentansprüche

1. Niederdruck-Quecksilberentladungslampe für Bräunungszwecke, mit
- einem gasdicht verschlossenen Lampengefäß, das mit Quecksilber und einem oder mehreren Edelgasen gefüllt ist,
- einem Leuchtschirm,
- Mitteln, um beim Betrieb der Lampe in dem Lampengefäß eine Entladung aufrechtzuerhalten,
**dadurch gekennzeichnet, dass**
- das Lampengefäß aus einem kurzwellige UV-Strahlung absorbierenden Material hergestellt ist, dessen Durchlässigkeit für UV-Strahlung mit einer Wellenlänge von 312,6 nm zwischen 10% und 50% liegt und dessen Wellenlängenbereich, in dem die Durchlässigkeit der UV-Strahlung sich von 20% bis 80% ändert, kleiner ist als 40 nm und größer als 28 nm,
- der Leuchtschirm einen ersten Leuchtstoff enthält, der eine Emissionsbandc mit einem Emissionsmaximum zwischen 300 nm und 330 nm und einer zwischen 15 nm und 30 nm liegenden Halbwertsbreite dieser Emission aufweist, und
- der Leuchtschirm weiterhin einen zweiten Leuchtstoff enthält, dessen Reflexion für UV-Strahlung mit einer Wellenlänge oberhalb 300 nm größer als 80% ist, und wobei das genannte Material eine Emissionsbande mit einem Emissionsmaximum im Wellenlängenbereich von 340 nm bis 370 nm aufweist, dessen Halbwertsbreite zwischen 35 nm und 80 nm liegt.

2. Niederdruck-Quecksilbercntladungslampe nach Anspruch 1, in der der erste Leuchtstoff mit Cer aktiviertes Lanthanphosphat umfasst.

3. Niederdruck-Quecksilberentladungslampe nach Anspruch 2, in der die Durchlässigkeit des Lampengefäßes für Strahlung mit einer Wellenlänge von 312,6 nm zwischen 30% und 40% liegt.

4. Niederdruck-Quecksilberentladungslampe nach Anspruch 2 oder 3, in der der zweite Leuchtstoff mit Blei aktiviertes Bariumsilicat enthält.

5. Niederdruck-Quecksilberentladungslampe nach einem oder mehreren der vorhergehenden Ansprüche, in der der zweite Leuchtstoff mit Blei aktiviertes Strontiummagncsiumsilicat enthält.

6. Niederdruck-Quecksilberentladungslampe nach einem oder mehreren der vorhergehenden Ansprüche, bei der der Leuchtschirm weiterhin einen dritten Leuchtstoff umfasst, dessen Reflexion für UV-Strahlung mit einer Wellenlänge oberhalb 300 nm mehr als 80% beträgt, wobei das genannte Material eine Emissionsbande mit einem Emissionsmaximum zwischen 370 nm und 400 nm und einer Halbwertsbreite im Bereich zwischen 35 nm und 80 nm aufweist.

7. Niederdruck-Quecksilberentladungslampe nach Anspruch 6, in der der dritte Leuchtstoff mit Blei aktiviertes Bariumstrontiummagnesiumborat umfasst.

8. Niederdruck-Quecksilberentladungslampe nach den Ansprüchen 2 und 4, in der das mit Cer aktivierte Lanthanphosphat zwischen 10 und 50 Gew.-% des Leuchtschirms ausmacht.

9. Niederdruck-Quecksilberentladungslampe nach den Ansprüchen 2 und 5, in der das mit Cer aktivierte Lanthanphosphat zwischen 3 und 40 Gew.-% des Leuchtschirms ausmacht.

10. Niederdruck-Quecksilberentladungslampe nach den Ansprüchen 2, 4 und 7, in der der Leuchtschirm zwischen 10 und 40 Gew.-% mit Cer aktiviertes Lanthanphosphat und zwischen 10 und 40 Gew.-% mit Blei aktiviertes Bariumsilicat umfasst.

## Revendications

1. Lampe à décharge dans la vapeur de mercure à basse pression destinée à des buts de bronzage, comprenant
- une enceinte à décharge qui est fermée d'une façon étanche au gaz et qui est remplie de mercure et d'un ou de plusieurs gaz inertes,
- un écran luminescent,
- des moyens permettant de maintenir une décharge dans l'enceinte à décharge, lors du fonctionnement de la lampe,
**caractérisée en ce que**
- l'enceinte à décharge de la lampe est réalisée en un matériau absorbant du rayonnement ultraviolet à courte longueur d'onde dont la transmission pour le rayonnement ultraviolet présentant une longueur d'onde de 312,6 nm se situe entre 10 % et 50 % et dont la gamme de longueurs d'onde sur laquelle la transmission du rayonnement ultraviolet change à partir de 20 % à 80 % est inférieure à 40 nm et supérieure à 28 nm,
- l'écran luminescent contient un premier matériau luminescent présentant une bande d'émission dont le maximum d'émission est compris entre 300 nm et 330 nm et dont la demi-largeur de cette émission se situe entre 15 et 30 nm, et
- l'écran luminescent contient en outre un deuxième matériau luminescent, dont la réflexion pour le rayonnement ultraviolet présentant une longueur d'onde supérieure à 300 nm est plus que 80 %, et qui présente une bande d'émission dont le maximum d'émission dans la gamme de longueurs d'onde est compris entre 340 nm et 370 nm et dont la demi-largeur se situe entre 35 nm et 80 nm.

2. Lampe à décharge dans la vapeur de mercure à basse pression selon la revendication 1, dans laquelle le premier matériau luminescent contient du phosphate de lanthane activé avec du cérium.

3. Lampe à décharge dans la vapeur de mercure à basse pression selon la revendication 2, dans laquelle la transmission de l'enceinte à décharge pour le rayonnement présentant une longueur d'onde de 312,6 nm est comprise entre 30 % et 40 %.

4. Lampe à décharge dans la vapeur de mercure à basse pression selon la revendication 1, 2 ou 3, dans laquelle le deuxième matériau luminescent contient du silicate de baryum activé avec du plomb.

5. Lampe à décharge dans la vapeur de mercure à basse pression selon l'une ou plusieurs des revendications précédentes, dans laquelle le deuxième matériau luminescent contient du silicate de strontium - magnésium activé avec du plomb.

6. Lampe à décharge dans la vapeur de mercure à basse pression selon l'une ou plusieurs des revendications précédentes, dans laquelle l'écran luminescent contient en outre un troisième matériau luminescent dont la réflexion pour le rayonnement ultraviolet présentant une longueur d'onde supérieure à 300 nm dépasse 80 %, ledit matériau présentant une bande d'émission dont le maximum d'émission est compris entre 370 nm et 400 nm et dont la demi-largeur se situe dans la gamme comprise entre 35 nm et 80 nm.

7. Lampe à décharge dans la vapeur de mercure selon la revendication 6, dans laquelle le troisième matériau luminescent contient du borate de baryum - strontium-magnésium activé avec du plomb.

8. Lampe à décharge dans la vapeur de mercure à basse pression selon les revendications 2 et 4, dans laquelle le phosphate de lanthane activé avec du cérium comprend 10 à 50 % en poids de l'écran luminescent.

9. Lampe à décharge dans la vapeur de mercure à basse pression selon les revendications 2 et 5, dans laquelle le phosphate de lanthane activé avec du cérium comprend 3 à 40 % en poids de l'écran luminescent.

10. Lampe à décharge dans la vapeur de mercure à basse pression selon les revendications 2, 4 et 7, dans laquelle l'écran luminescent comprend 10 à 40 % en poids de phosphate de lanthane activé avec du cérium et 10 à 40 % de silicate de baryum activé avec du plomb.
